(19) Europäisches Patentamt
European Patent Office
Office européen des brevets

(11) **EP 3 909 192 B1**

(12) **EUROPEAN PATENT SPECIFICATION**

(45) Date of publication and mention
of the grant of the patent:
**08.11.2023 Bulletin 2023/45**

(21) Application number: **20701106.5**

(22) Date of filing: **10.01.2020**

(51) International Patent Classification (IPC):
**H04L 5/06** (2006.01)

(52) Cooperative Patent Classification (CPC):
**H04L 5/06;** H04L 27/02; H04L 27/26

(86) International application number:
**PCT/GB2020/050052**

(87) International publication number:
**WO 2020/144482 (16.07.2020 Gazette 2020/29)**

(54) **A METHOD OF GENERATING AND PROCESSING A TRANSPORT SIGNAL FOR CARRYING CHANNELS IN A RADIO ACCESS NETWORK**

VERFAHREN ZUR ERZEUGUNG UND VERARBEITUNG EINES TRANSPORTSIGNALS ZUM TRAGEN VON KANÄLEN IN EINEM FUNKZUGANGSNETZWERK

PROCÉDÉ DE GÉNÉRATION ET DE TRAITEMENT D'UN SIGNAL DE TRANSPORT POUR SUPPORTER DES CANAUX DANS UN RÉSEAU D'ACCÈS RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2019 GB 201900363**

(43) Date of publication of application:
**17.11.2021 Bulletin 2021/46**

(73) Proprietor: **University of Kent
Canterbury
Kent CT2 7NZ (GB)**

(72) Inventors:
• **ASIMAKOPOULOS, Philippos**
**Canterbury Kent CT2 7NZ (GB)**
• **GOMES, Nathan**
**Canterbury Kent CT2 7NZ (GB)**
• **NOOR, Shabnam**
**Canterbury CT2 7NZ (GB)**

(74) Representative: **Elkington and Fife LLP
Prospect House
8 Pembroke Road
Sevenoaks, Kent TN13 1XR (GB)**

(56) References cited:
**EP-A1- 1 395 012     US-A1- 2017 078 024**

**Description**

FIELD OF THE INVENTION

The invention relates to multiplexing and demultiplexing signals, and in particular methods of multiplexing and demultiplexing signals that are suitable for fronthaul design of mobile radio access networks.

BACKGROUND OF THE INVENTION

There is increasing demand for radio access networks (RANs) to improve both efficiency and performance. In particular, with the advent of newly proposed mobile networks such as 5G, there is a desire to increase the number of signals or channels that can be passed from a distributed unit (DU) to a remote radio unit (RRU) for transmission. The portion of the RAN that handles such communications is commonly called the "fronthaul".

Conventional fronthauls rely on the transport of time domain In-phase and Quadrature (IQ) quantized signals, which would result in very high bit rates over the fronthaul section for advanced 4th generation (4G) and 5th generation (5G) mobile networks.

Analog transport within the fronthaul, e.g. between at least the DU and the RRU, can provide improved spectral efficiency and reduced latency. One low-cost, analog domain multiplexing technique is subcarrier multiplexing (SCM) which traditionally multiplexes signals using analog components (local oscillators, mixers, bandpass filters and so on). However, such analog domain multiplexing becomes increasingly impractical for larger signal counts as it would require both a large number of analog components and the ability to finely control these components, resulting in very high complexity and cost.

An alternative multiplexing method would employ digital domain multiplexing and the use of digital signal processing. However, although the distributed unit can be expected to comprise high sampling rates and large bandwidth Analog-to-Digital and Digital-to-Analog Converters (ADCs and DACs), it would be beneficial to reduce the amount of processing that each RRU needs to perform (to improve efficiency and cost). This is especially important for mMIMO (massive multiple-input multiple-output) applications with a large number of channels that would normally require individual processing for each channel.

There is therefore a desire to provide an improved method of communicating within a fronthaul, and in particular between a distributed unit and a remote radio unit.

US 2017/078024 A1 discloses a method for generating a wireless signal carrying a plurality of signals.

EP 1,395,012 A1 descirbes an approach for modulating a digital and analogue signal to a carrier signal.

SUMMARY OF THE INVENTION

The invention is defined by the claims.

According to examples in accordance with an aspect of the invention, there is provided a method of multiplexing a plurality of channels, wherein the channels can have different bandwidths, to generate an analog transport signal, for communicating from a distributed unit to a remote radio unit of a fronthaul for a radio access network. The method comprises: dividing the plurality of channels into channel sets; defining a plurality of frequency bands within the analog transport signal, each frequency band being of the same predetermined width and immediately abutting another of the plurality of frequency bands; assigning a respective frequency band to each channel set; constructing a frequency domain representation of the analog transport signal by, for each channel set, arranging each channel within the frequency band assigned to the channel set so that, if the analog transport signal is sampled at a frequency equal to twice the predetermined width, each channel of each channel set has the same center frequency as a corresponding channel of at least one other channel set; and generating the analog transport signal by converting the frequency domain representation of the analog transport signal to the time domain.

Thus, the proposed method creates an analog transport signal that can be conceptually divided into a plurality of (potentially infinite) frequency bands, the width of each frequency band being identical and predetermined. Channels (i.e. signals to be carried by the analog transport signal) are positioned in the analog transport signal so that, if the analog transport signal is sampled at a particular sampling frequency (being twice the width of a frequency band), a sampled first channel of a first frequency band has the same center frequency as at least a sampled first channel of a second frequency band, (and preferably a sampled first channel of a third frequency band, if present, and so on).

Thus, each channel corresponds to at least one other channel of at least one other channel set (forming "corresponding channels"). Corresponding channels are channels which are arranged so that if the analog transport signal is sampled at a frequency equal to twice the predetermined width, the corresponding channels have the same center frequency. When the transport signal is sampled at a sampling frequency equal to twice the predetermined width of a frequency band, a center frequency of the sampled, corresponding channels are the same.

A "center frequency" is a frequency located in the middle of a channel. Thus, a channel is associated with an upper and lower frequency (being the bounds of the channel in the frequency domain), and a center frequency is located at the arithmetic mean of the upper and lower frequencies.

In other words, the plurality of channels are each mapped into the analog transport signal so that, if the analog transport signal is sampled at a predetermined sampling frequency, certain ones of the channels will appear at the same location in the frequency domain, thereby having the same intermediate frequency.

Each channel(s) of a frequency band is located at the same relative location (within the frequency band) as a respective channel in at least one other frequency band or a mirror image (being a flipped and conjugated image) thereof. Thus, corresponding channels are located at a same relative location within their respective frequency bands.

The mirror image may be necessary if a frequency band is an "even" frequency band. An "even" frequency band of a signal is a frequency band that, if the signal is sampled at twice the width of the frequency band, will be flipped and conjugated as a result of the sampling (due to the folding effect of the sampling), as compared to an "odd" frequency band which would not be flipped and conjugated. A mirror image may therefore be a flipped and conjugated representation of a particular frequency band.

A frequency band may also be labelled a "Nyquist zone", as it is designed to be the size of a Nyquist zone when sampled by a receiver. Thus, the width of the frequency band is designed to be the width of the Nyquist bandwidth with respect to a sampling of the transport signal.

By positioning each channel in this manner, down-conversion can be performed using the same sampling rate for each frequency band, resulting in the down-converted, corresponding channels being located at the same known location or intermediate frequency. This simplifies a process to be performed by the receiver of the analog transport signal, as channels will be in a known location.

In preferable embodiments, each channel set comprises a same number of channels. Of course, additional channels (e.g. not corresponding to other channels or the plurality of channels) may be inserted into empty spaces within the frequency bands, i.e. spaces not occupied by channels of the plurality of channels.

Preferably, the step of constructing the frequency domain representation comprises, for each channel set, arranging each channel within the frequency band assigned to the channel set so that, if the analog transport signal is sampled at the frequency equal to twice the predetermined width, each channel of each channel set wholly overlaps the corresponding channel of each at least one other channel set. Thus, when downsampled, corresponding channels may wholly overlap one another.

The term "wholly overlap" is here used to mean covers the same range of frequencies in a frequency spectrum. Thus, if two channels wholly overlap one another, this means that they share substantially the same range of frequencies (e.g. $\pm 2\%$ at either or both ends of the respective ranges). This simplifies a process to be performed by the receiver of the analog transport signal, as corresponding channels will each cover a known bandwidth of frequencies

Preferably, each channel of each channel set is created through a similar process (e.g. according to a particular radio access technology) as a respective channel of the at least one other channel set. In other words, each channel may be designed for a same radio access technology (RAT) as each corresponding channel (being a respective channel of the at least one other channel set). Here, a corresponding channels comprise channels that, if the analog transport signal is sampled at a frequency equal to twice the predetermined width, have a same center frequency.

Even more preferably, each channel of each channel set is modulated according to the same modulation scheme (e.g. QAM, DMT, SSB and so on) as a respective channel of each at least one other channel set. In other words, corresponding channels may be modulated according to the same modulation scheme. In some embodiments, corresponding channels are modulated to a same modulation level (e.g. one of 16-QAM, 32-QAM, 64-QAM and so on). In particular, each channel of a channel set may be encoded in the same way as a respective channel of another channel set (at least so as to cover the same range of frequencies), so that corresponding channels are encoded in a same way.

In some preferable embodiments, each channel of a channel set corresponds to a respective channel of each other channel set. Thus, the step of constructing a frequency domain representation of the analog transport signal may comprise, for each channel set, arranging each channel within the frequency band assigned to the channel set so that, if the analog transport signal is sampled at a frequency equal to twice the predetermined width, each channel of each channel set has the same center frequency as a corresponding channel of each other channel set.

In preferable embodiments, the predetermined width of a frequency band is no less than the summed width of each signal within a (e.g. the largest) single channel set. Thus, an arbitrary number of signals can be located within each frequency band, provided that the total bandwidth they occupy is smaller than the predetermined width of the band.

The step of constructing the frequency domain representation may be performed so that, for each channel set, each channel is located at the same relative location within the frequency band as the corresponding channel of each at least one other channel set.

Thus, during construction of the frequency domain representation, channels, to be placed in different frequency bands, that correspond to one another may be placed a same distance from a lower frequency of the respective frequency band.

Preferably, the step of constructing the frequency domain representation further comprises performing flipping and conjugation on channels located in alternate frequency bands. This means that channels located in even frequency bands (i.e. frequency bands located between two "odd" frequency bands) may undergo flipping and conjugation so that if the analog transport signal is sampled at a frequency equal to twice the predetermined width, that the even bands are correctly folded into the first Nyquist zone.

This may, for example, be performed by determining whether an end frequency of the frequency band of the channel set is an even number when divided by the predetermined width; and in response to a positive determination, performing flipping and conjugation on the frequency band so that, if the analog transport signal is sampled at a frequency equal to twice the predetermined width, each channel of the channel set wholly overlaps a corresponding channel of a channel set that has not undergone flipping and conjugation.

Preferably, the step of converting the frequency domain representation comprises converting the frequency domain representation using a single time domain transform to convert the frequency domain representation. The inventors have recognized that a single time domain transform can be used to generate the time domain signal, rather than necessitating the use of multiple different transforms. A time domain transform is any suitable transform that converts a frequency domain signal or frequency domain data into a time domain signal or time domain data. A preferred example of time domain transform is an inverse fast Fourier transform (IFFT).

The (digital) time domain signal output by the single time domain transform may be converted into the analog transport signal using a digital to analog converter.

There is also proposed a corresponding method of demultiplexing an analog transport signal generated by performing any method previously described. The method comprises: receiving the analog transport signal; performing analog-to-digital conversion on the analog transport signal using an analog-to digital converter, to produce a digitized signal; digitally filtering the digitized signal to obtain a separate signal for each frequency band; and sampling each separate signal at a sampling frequency equal to twice the predetermined width to obtain a down-sampled copy of each frequency band.

The method further comprises, for each down-sampled copy of each frequency band, performing individual (digital) filtering to obtain each channel of the down-sampled copy, wherein the channels can have different bandwidths.

There is also proposed an alternative method of demultiplexing an analog transport signal generated by performing a previously described method. The method comprising: defining two or more blocks of frequencies in the analog transport signal, each block being of the same predetermined bandwidth and each comprising a whole number of frequency bands, wherein the one or more blocks of the analog transport signal together carry the plurality of channels; for each block of the analog transport signal, filtering the analog transport signal to generate a respective filtered transport signal containing the respective block of the analog transport signal and performing a demultiplexing operation on each respective filtered transport signal comprising: performing a time-domain sampling operation on the filtered transport signal, to produce a down-shifted analog signal comprising a block of the analog transport signal; performing analog-to-digital conversion on the down-shifted analog signal using an analog-to digital converter, to produce a digitized down-shifted signal; digitally filtering the digitized down-shifted signal to obtain separate signals for each frequency band carried by the digitized down-shifted signal; and sampling each separate signal at a sampling frequency equal to twice the predetermined width to obtain a down-sampled copy of each frequency band.

This effectively enables an entire block of frequencies to be shifted (by the receiver) into a different bandwidth, in particular to a bandwidth of the ADC of the receiver. Thus, by using a time domain sampling device such as a sample-and-hold or track-and-hold device to downshift a block of frequencies, the effective bandwidth of the ADC of the receiver can be increased.

The one or more blocks comprises two or more blocks; and the method further comprises, for each block of the analog transport signal, filtering the analog transport signal to generate a respective filtered transport signal containing the respective block of the analog transport signal; and the step of performing a demultiplexing operation is performed on each respective filtered transport signal.

Thus, there is envisaged a concept for providing an analog transport signal in which signals are carried by a greater range of frequencies than the bandwidth of an ADC of a receiver of the transport signal. Thus, the bandwidth of the analog transport signal is not restricted by the bandwidth of an ADC of a receiver of the analog transport signal, increasing an amount of data that can be sent over the analog transport signal. Rather, the analog transport signal can be divided or portioned into separate filtered analog signals, each of which can be individually processed by an ADC.

The predetermined bandwidth of each portion is preferably no greater than a bandwidth of the analog-to-digital converter. In particular embodiments, the predetermined bandwidth may be equal to the bandwidth of the analog-to-digital converter.

There is proposed a method of communicating between a distributed unit and a remote radio unit of a fronthaul for a radio access network. The method comprises: multiplexing a plurality of channels onto an analog transport signal by using the distributed unit to perform any method of multiplexing herein described; transmitting the analog transport signal from the distributed unit to the remote radio unit; and demultiplexing the analog transport signal by using the remote radio unit to perform any method of demultiplexing the analog transport signal previously described.

Preferably, the step of transmitting the analog transport signal comprises transmitting the analog transport signal using an optical link between the distributed unit and the remote radio unit. Thus, the analog transport signal may be modulated onto an optical signal for transmittal. Methods of modulating and demodulating an analog transport signal onto and from an optical signal are well known in the art.

Embodiments also provide a distributed unit for multiplexing a plurality of channels, wherein the channels can have different bandwidths, onto an analog transport signal for communicating with a remote radio unit of a fronthaul for a radio access network. The distributed unit comprises a processor adapted to: divide the plurality of channels into channel sets, each channel set comprising the same number of one or more channels; define a plurality of frequency bands within the analog transport signal, each frequency band being of the same predetermined width and immediately abutting another frequency band; assign a respective frequency band to each channel set; construct a frequency domain representation of the analog transport signal by for each channel set, arranging each channel within the frequency band assigned to the channel set so that, if the analog transport signal is sampled at a frequency equal to twice the predetermined width, each channel of each channel set has the same intermediate frequency as a corresponding channel of at least one other channel set; and generate the analog transport signal by converting the frequency domain representation of the analog transport signal to the time domain.

There is also provided a remote radio unit adapted to receive an analog transport signal generated by the distributed unit. The remote radio unit comprises a processor adapted to: receive the analog transport signal; perform an analog-to-digital conversion on the analog transport signal using an analog-to digital converter; digitally filter each frequency band to obtain separate signals for each frequency band; sample each separate signal at a sampling frequency equal to twice the predetermined width to obtain a down-sampled copy of each frequency band; and for each down-sampled copy of each frequency bans, perform individual filtering to obtain each channel of the down-sampled copy, wherein the channels can have different bandwidths.

There is also proposed a fronthaul comprising: a distributed unit previously described; a remote radio unit previously described; and a communication channel for carrying the analog transport signal between the distributed unit and the remote radio unit.

There is also proposed a method of multiplexing a plurality of channels, comprising both DMT-derived and SSB-derived channels, to generate an analog transport signal, for communicating from a distributed unit to a remote radio unit of a fronthaul for a radio access network. The method comprises: constructing a single frequency domain representation of the analog transport signal by arranging each DMT-derived and SSB-derived channel at appropriate frequencies; converting the frequency domain representation of the analog transport signal to the time domain using a single time domain transform, to thereby generate a digital version of the analog transport signal; performing a digital-to-analog process on the digital version of the analog transport signal to generate the analog transport signal.

A time domain transform is any suitable transform that converts a frequency domain signal or frequency domain data into a time domain signal or time domain data. A preferred example of time domain transform is an inverse fast Fourier transform (IFFT).

There is also proposed a method of demultiplexing an analog transport signal, communicated from a distributed unit to a remote radio unit of a fronthaul for a radio access network, carrying a plurality of channels. The method comprises: defining two or more blocks of frequencies in the analog transport signal, wherein the one or more blocks of the analog transport signal together carry the plurality of channels; for each block of the analog transport signal, filter the analog transport signal to generate a respective filtered transport signal containing the respective block of the analog transport signal and performing a demultiplexing operation on each respective filtered transport signal comprising: performing a time-domain sampling operation on the filtered transport signal, to produce a down-shifted analog signal comprising a block of the filtered transport signal; performing analog-to-digital conversion on the down-shifted analog signal using an analog-to digital converter, to produce a digitized down-shifted signal; and performing individual filtering to isolate each channel from the digitized down-shifted signal.

This effectively enables an entire block of frequencies to be shifted (by the receiver) into a different bandwidth, in particular to a bandwidth of the ADC of the receiver. Thus, by using a time domain sampling device such as a sample-and-hold or track-and-hold device to downshift a block of frequencies, the effective bandwidth of the ADC of the receiver can be increased.

Thus, there is envisaged a concept for providing an analog transport signal in which signals are carried by a greater range of frequencies than the bandwidth of an ADC of a receiver of the transport signal. Thus, the bandwidth of the analog transport signal is not restricted by the bandwidth of an ADC of a receiver of the analog transport signal, increasing an amount of data that can be sent over the analog transport signal. Rather, the analog transport signal can be divided or portioned into separate filtered analog signals, each of which can be individually processed by an ADC.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 illustrates a network employing a radio access network;
Figure 2 illustrates a transport signal generated by a method according to an embodiment;
Figure 3 illustrates an architecture for generating a transport signal according to an embodiment;
Figure 4 illustrates a concept for generating a transport signal according to an embodiment;
Figure 5 illustrates a method of demultiplexing a transport signal according to an embodiment;
Figure 6 illustrates an architecture for demultiplexing a transport signal according to an embodiment;
Figure 7 illustrates an embodiment for increasing an effective bandwidth of an analog-to-digital converter; and
Figure 8 illustrates an architecture for increasing an effective bandwidth of an analog-to-digital converter.

DETAILED DESCRIPTION OF THE EMBODIMENTS

The invention will be described with reference to the Figures.
It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.
The invention relates to a technique for the creation of an analog transport signal with the aim of efficiently multiplexing and de-multiplexing a large number of signals. Proposed signals can be part of a mMIMO system or a heterogeneous networking system that uses one or more different radio-access technologies (RATs) at the RRU, or part of a system which is a mixture of both.
In particular, the invention provides a method of generating and processing an analog transport signal for a fronthaul of a radio access network, where the analog signal carries a plurality of channels. The analog signal is generated by defining frequency bands of a fixed width within the analog transport signal. Channels are arranged within each frequency band so that, if the analog transport signal is sampled at a frequency equal to twice the fixed width, each channel of a frequency band has the same intermediate frequency as a corresponding channel of at least one other frequency band. A method of demultiplexing the analog transport signal for execution by a receiver is also proposed.

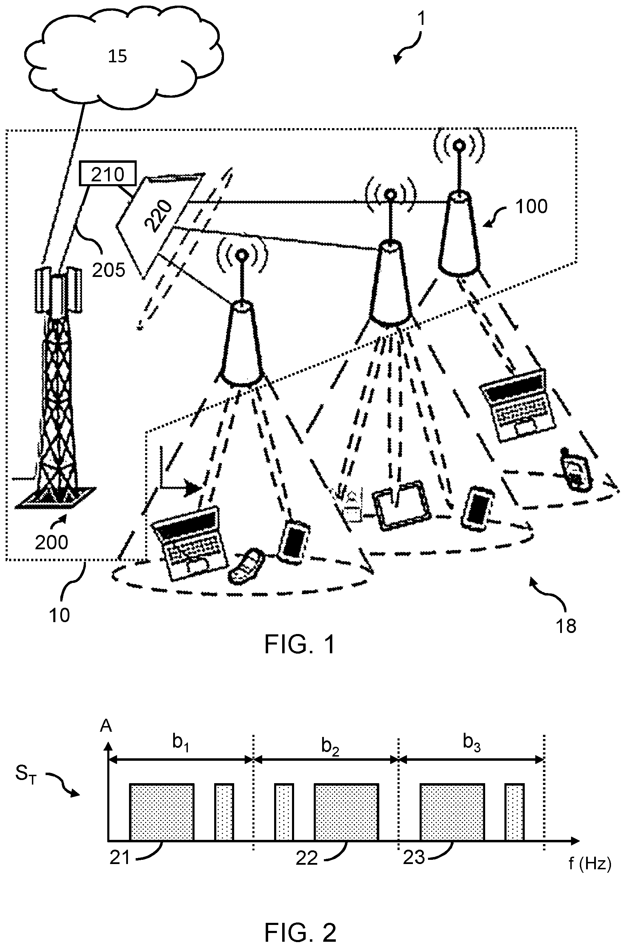

Figure 1 illustrates a network 1 employing a radio access network 10 for understanding an underlying context of the invention. The radio access network 10 enables a core network 15 to communicate with end devices 18, such as mobile phones, laptops and so on.
The radio access network 10 comprises a central unit 200 that employs a high layer split (HLS) 205 to communicate with a distributed unit (DU) 210. The distributed unit 210 communicates with one or more remote radio units 100 (which in turn, communicate with the end devices, e.g. using WiFi, LTE, Bluetooth and so on). For example, different remote radio units may be adapted for communicating using different wireless communication protocols. Optionally, the radio access network 10 comprises a wavelength division multiplexing (WDM) module 220 to allow for different wavelengths of light to address different remote radio units 100.
The present invention is particularly advantageous when used by the distributed unit 210 to communicate with the one or more remote radio units 100. In particular, the present invention is concerned with improved efficiency of communication between the distributed unit and a remote radio unit, and reduced complexity of one or both of these units.
Communications between the central/distributed unit and the remote radio units 100 may take placed, for example, via the direct or external modulation of a light source (i.e. using an optical link). Thus, an analog transport signal may be modulated onto an optical signal for transportation.
In particular, the present invention relates to a concept of generating a transport signal to be passed from the DU to a RRU, and methods of demultiplexing the transport signal (e.g. to be performed by the RRU). The envisaged transport signal can employ a large number of channels that can be passed to the RRU, whilst enabling a relatively simple architecture to be used (by the RRU) for processing the transport signal.
Other terminologies for the term "distributed unit" may be used, for example, reference may instead be made to communication from a central unit or central controller to a remote radio unit (as such communication typically takes place via a distributed unit).
Figure 2 is a frequency-domain plot of an exemplary analog transport signal $S_T$ generated by a method according to an embodiment, in which the exemplary transport signal carries a plurality of channels. Suitable methods for generating such a transport signal $S_T$ will be explained later.

The transport signal $S_T$ is conceptually divisible into a plurality of different frequency bands $b_1$, $b_2$, $b_3$, ..., $b_n$. Each frequency band is of the same width, i.e. covers the same number or range of frequencies, and preferably (as illustrated) carries the same number of channels . Thus, each frequency band carries or is associated with a respective channel set formed of one or more channels. A frequency band follows on from an immediately previous frequency band, although not all frequency bands need to carry a respective channel set.

Each frequency band, as later explained, represents a Nyquist zone of a sampling step performed by a receiver of the transport signal. The size (i.e. width) of a frequency band is therefore not arbitrary, but rather is determined by the sampling rate to be used by a device that receives the transport signal.

The channels are arranged within a respective frequency band (e.g. by defining an center frequency of the channel) so that, if the transport signal $S_T$ is sampled at a frequency equal to twice the width of a frequency band (e.g. by an ADC that receives the transport signal), each channel of any given frequency band would have the same intermediate frequency as a channel of at least one other frequency band. Thus, each channel is placed at a specific location in the frequency domain to thereby correspond to at least one other channel.

Of course, additional channels (not shown), that do not correspond to other channels, may be placed at empty locations within the frequency domain of the transport signal.

Preferably, each channel of any given frequency band would wholly overlap a corresponding channel in at least other frequency band (after sampling at the specified rate). In this context, "wholly overlap" is used to mean "shares substantially the same band of frequencies". Thus, if a sampled first channel wholly overlaps a second channel, a start frequency of the sampled first channel is substantially identical (e.g. $\pm$ 2%) to the start frequency of the second sampled channel, and an end frequency of the first channel is substantially identical (e.g. $\pm$2%) to the end frequency of the second sampled channel.

In order to enable each channel to wholly overlap at least one other corresponding channel, said channels need to have substantially the same bandwidth.

For example, in the illustrated embodiment, if sampled at a rate equal to twice the width of a frequency band, a first signal 21 of a first frequency band $b_1$ would have the same intermediate frequency and wholly overlap a first signal 22 of a second frequency band $b_2$ and a first signal 23 of a third frequency band $b_3$.

However, it is not essential for each to wholly overlap another corresponding channel (e.g. they may have different bandwidths), nor is it essential for each channel to map onto a channel of every other frequency band (i.e. a channel does not need to correspond to a channel of each other channel set). Rather, each channel should, if the transport signal $S_T$ is sampled at a frequency equal to twice the width of a frequency band, have a same intermediate frequency (central frequency) as one or more channels from one or more respective other frequency bands.

Thus, each channel is either arranged at the same relative location within its frequency band (e.g., the first channel 21 of the first frequency band $b_1$ and the first channel 22 of the third frequency band $b_3$) or at a mirrored location within the frequency band (such as the first channel 21 of the first frequency band $b_1$ and the first channel 22 of the second frequency band $b_2$) as at least one corresponding channel of at least one respective other frequency band.

The "mirrored location" means that a channel has been flipped and conjugated (e.g. reversed) and positioned the same distance from an end frequency of a frequency band as a corresponding "non-mirrored" channel from a start frequency of another frequency band. This mirroring is required due to the "concertina" folding effect that occurs when sampling at the specified rate (which effectively flips "even" frequency bands).

An arbitrary number of channels can be located in each frequency band, for example, only a single channel or a plurality of channels. Thus, the number of channels in a channel set (and thereby carried by a given frequency band) can vary in different implementations.

Preferably, in each frequency band, each channel corresponds to a respective/corresponding channel in another frequency band. In embodiments, each channel has the same bandwidth as a respective signal in another frequency band and is located such that (if the transport signal is sampled at twice the width of a frequency band) the channel will wholly overlap the respective signal.

In particular embodiments, each channel may have the same numerology as a corresponding channel in at least one other respective frequency band. Channels having the same numerology may be positioned in their respective frequency bands so that, if the transport signal is sampled at twice the width of a frequency band, the sampled channels having the same numerology would be at the same intermediate frequency. The term "numerology" is used here to indicate a particular bandwidth, subcarrier spacing and number of subcarriers for a channel.

This enables channels that should be processed in the same way by a receiver to be present at the same intermediate frequency after the transport signal is sampled. This makes processing of the channels simpler.

It will be appreciated that the transport signal can be filtered to individually isolate each frequency band $b_1$, $b_2$ and $b_3$, e.g. using respective a digital bandpass filter, in separate signals (being a filtered transport signal). Sampling each separate signal at the same sampling rate (namely, a frequency equal to twice the width of a frequency band) would result in a plurality of signals, each carrying a down-sampled copy of a respective frequency band, being generated ("down-sampled signal"). Each down-sampled signal, each now carrying only a single frequency band, would have the same intermediate frequency (due to the same sampling rate). Corresponding channels of different frequency bands would be located at the same intermediate frequencies in different down-sampled transport signals.

This means, in effect, that different collections of channels can be obtained from the transport signal at known intermediate frequencies (IFs), i.e. it will be known at which frequencies each channel of a frequency band is located after down-sampling.

Thus, when a receiver (such as the RRU) receives such a transport signal from a transmitter (such as the DU), the digital signal processing performed by the receiver is simplified. For example, signals can be readily up-converted to the appropriate wireless communication protocol (e.g. required RF / mmW frequencies) by the RRU as their location will be known.

In this way, the invention allows efficient utilization of the available capacity of the link to provide very high spectral efficiencies while allowing the receiver to employ arbitrary low sampling rates with relaxed analog bandwidth requirements of its ADCs, and allows flexibility in the placement of multiplexes in the frequency domain.

As previously explained, each frequency band or "Nyquist zone" (into which different sets of channels are placed) has a predetermined size. This predetermined size may be defined by equation (1):

$$\frac{F_{s,rx}}{2D} \qquad\qquad (1)$$

where $F_{s,rx}$ is the sampling rate of an ADC used by a receiver while D is the down-sampling factor used by the receiver.

Thus, the size of a frequency band is defined with respect to the sampling rate performed by an ADC that receives the transport signal, and in particular is equal in width (and preferably position) to a Nyquist zone introduced by such sampling.

Having established the structure of the desired analog transport signal, an exemplary architecture for generating such a multiplexed transport signal will be hereafter described.

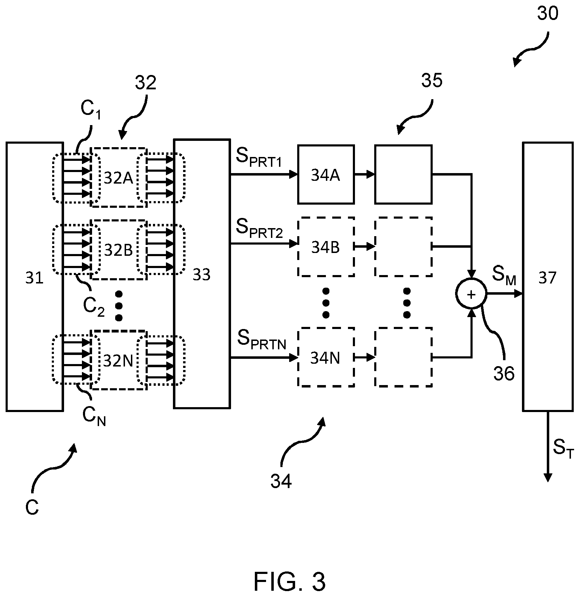

Figure 3 is a block diagram illustrating an architecture for generating an analog transport signal $S_T$. The architecture may be integrated into a transmitter (e.g. a DU) that generates the transport signal St and passes it to a receiver (e.g. a RRU). The receiver uses an analog-to-digital (ADC) converter to demultiplex the transport signal, as will be later explained.

Initially, each channel C ($C_1$ - $C_N$) is provided by a channel provider 31.

A channel may be an organized grouping of contiguous modulation mapping-derived (e.g. QAM, QPSK, BPSK etc.) frequency domain samples (i.e. symbols or subcarriers). As is known in the art, each sample may have its own phase as determined by the modulation mapping (real or complex) and the relative amplitudes of the (In-phase and Quadrature) components that make up each sample.

In a particular example, the channel provider 31 produces modulated symbols (which may be real, e.g. derived from BPSK mapping, or complex, e.g. derived from QPSK, QAM mapping or a combination of both). Symbols may be interleaved and/or cross-processed, for example by applying precoding before being output by the channel provider 31. These symbols may be labelled subcarriers or, as previously set out, frequency domain samples.

Optionally, a pilot insertion system 32 (formed of pilot insertion modules 32A-32N) may add a predetermined number of pilots to each channel. This may facilitate channel response tracking and equalization at the receiver side. In an example, the symbols generated by the channel provider 31 may be optionally extended with pilots using the pilot insertion system 32, so that pilot symbols are inserted at specific locations in the frequency domain to allow channel responses to be tracked.

Channels can have different bandwidths by grouping different numbers of subcarriers or samples but will preferably have the same subcarrier spacing (being a spacing between different samples of a channel).

A mapping device 33 performs the mapping of different channels to appropriate positions in the frequency spectrum for the analog transport signal. Thus, the mapping device constructs (in the digital domain) a frequency domain representation of the analog transport signal. The mapping performed by the mapping device arranges the channels in the appropriate frequency bands as previously described. The mapping device 33 may insert null subcarriers or null channels to facilitate or ease digital filtering at the receiver side.

In order to ensure that, if the transport signal is sampled at a frequency equal to twice the width of a frequency band, a channel will have a same center/intermediate frequency as a corresponding channel of another frequency band, it may be necessary to perform (complex) conjugation or flipping on that channel or the frequency band into which that channel is placed. This is done to compensate, at the transmitter end, for the folding effect resulting from the sampling process at the receiver end. This can help to reduce the complexity of processing necessary at the receiver (RRU).

Thus, if a channel is to be positioned in an "odd" numbered frequency band, then no conjugation or flipping needs to be performed on that channel, as any down-sampling will result in each channel within that band being in the desired orientation and location. However, if a channel is to be positioned in an "even" numbered frequency band, then that channel should be conjugated and flipped before being mapped to its appropriate frequency, or the frequency band can be flipped and conjugated after channels are positioned therein (e.g. as if it were an "odd" numbered frequency band).

This ensures that (if the transport signal is sampled at a frequency equal to twice the predetermined band), the channels in both the "odd" and "even" numbered frequency bands will be correctly resolved to provide a correctly oriented copy (i.e. a channel will appear at an expected or desired intermediate frequency after down-sampling).

Here, an "odd" numbered frequency band is a frequency band that ends in a frequency that, when divided by the width of the frequency band, is an odd number. Similarly, an "even" numbered frequency band is a frequency band that ends in a frequency that, when divided by the width of the frequency band, is an even number. The frequency bands of the transport signal alternate between being "odd" and "even" (beginning, at 0Hz, with "odd").

This flipping and conjugation may be performed by the mapping device 33 of the system 30. The flipping (reversal) and complex conjugation of a frequency band or channel is straightforward to implement, since the signal is being constructed in the frequency domain.

By way of example, if frequency band to be flipped and conjugated is represented by a function F(k), where k is a frequency domain sample, a flipped frequency band $F_{flip}$ may be calculated using the following equation:

$$F_{flip}(k) = F(N - k) \qquad (2)$$

where N is the number of frequency domain samples that make up the frequency band.

In some other examples, the flipping and conjugation may instead be performed at the receiver side, but this may make the receiver more complex. Of course, the flipping and conjugation may instead be performed on only the "odd" frequency bands. This will reverse the location of the channels between the transmitter and receiver, and may therefore prove more complex.

Channels that have been subject to flipping and/or conjugation are positioned (by the mapping device) the same relative distance from an end frequency of its predetermined band as a corresponding channel that has not been flipped and/or conjugated is positioned from a start frequency of its predetermined frequency band. Here, distance refers to a distance between a center frequency of a channel and a start/end frequency of the associated frequency band (depending on whether it is in an odd or even frequency band respectively).

Effectively, this causes the entirety of the even frequency bands to be flipped and/or conjugated.

A time domain conversion system 34 then converts the frequency domain representation (generated by the mapping device 33) of the analog transport signal to a (digital) time domain representation of the same, being a digital version of the analog transport signal. The time domain conversion system may, for example, employ an inverse discrete Fourier transform (IDFT) process, such as an inverse fast Fourier transform IFFT process, to perform this conversion. For the remainder of this description, the term IFFT is used to represent a frequency to time domain transformation, but any other suitable process for generating a time domain signal from frequency domain data can be used instead. This digital version of the analog transport signal can then be converted into the analog transport signal by a digital-to-analog converter 37, thereby generating the analog transport signal $S_T$.

In some embodiments, a single IFFT 34A is used to convert the frequency domain representation of all mapped channels in the frequency domain. This simplifies the generation of the digital version of the analog transport signal.

However, it may be desirable for different groups of channels to be converted with different IFFTs. For example, different IFFTs 34A-34N may be used to perform the conversion of the frequency domain representation of different desired numerologies, modulation schemes or for different RAT types (for use at the receiver end). This is particularly useful when different groups of channels need to be carried by the analog transport signal, where it is desired that each group be associated with a different numerology or modulation scheme.

The mapping device 33 may be appropriately adapted to generate more than one partial frequency domain representation $S_{PRT1}$ - $S_{PRT2}$, which (when combined) together form the overall frequency domain representation. Each partial frequency domain representation may then be converted by a respective IFFT 34A-34N to generate a respective component of the digital time domain representation of the analog transport signal. The converted components may then be combined by a combining unit 36 to form a digital version of the analog transport signal. The digital version may then be converted into the analog transport signal by a digital-to-analog converter 37.

Alternatively the converted components may be combined by a combining unit following the digital-to-analog converter processes, e.g. the combining unit may be formed in the digital-to-analog converter 37 or be positioned after the digital-to-analog converter 37.

This allows different channels that should be converted to provide different numerologies (e.g. destined for use with different RAT systems) to be carried by a single analog transport signal.

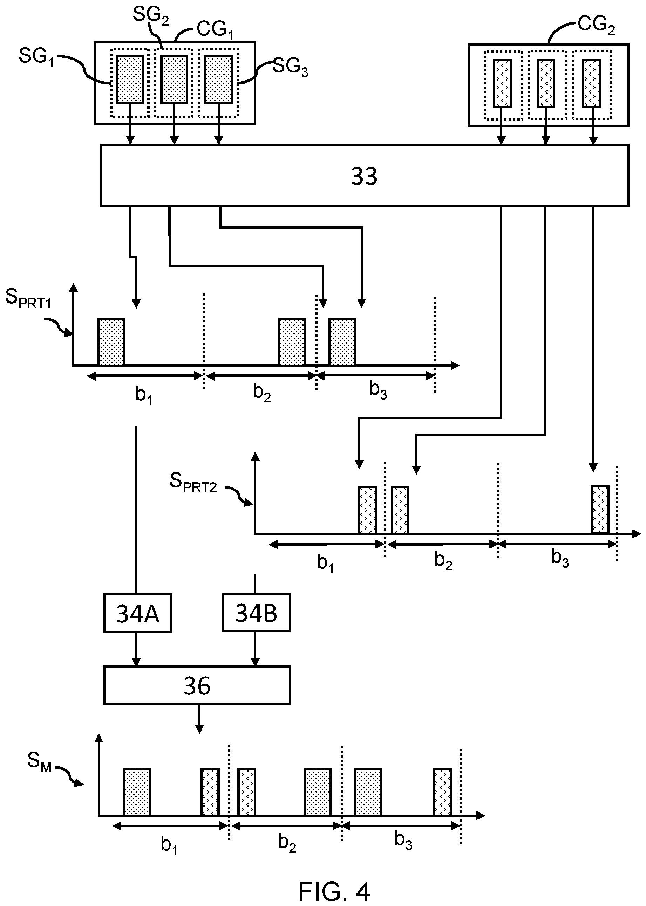

A concept of generating more than one partial frequency domain representation is illustrated in Figure 4.

According to the concept, the plurality of channels (to be transported by the analog transport signal) may be divided into groups of channels $CG_1$, $CG_2$, where each group is designed for being converted according to different numerologies, designed for different RAT types and so on (according to implementation requirements), e.g. destined for a different IFFT. Each group of channels is used to generate a different segment $S_{PRT1}$, $S_{PRT2}$ of a frequency domain representation for the analog transport signal.

Each group of channels $CG_1$, $CG_2$ may subsequently be split into a plurality of different subgroups $SG_1$, $SG_2$, $SG_3$ of one or more channels, where each subgroup is to be mapped to a different frequency band. Thus, the number of subgroups is preferably equal to the number of frequency bands defined in the analog transport signal.

Each subgroup (of a particular group) is positioned in its frequency band by the mapping device 33 so that, if a time domain version of the partial frequency domain representation were to be sampled at a sampling rate equal to twice the width of the frequency band, then the subgroups of any given group would be located at the same intermediate frequency(ies). This may require, as previously explained, appropriate flipping and conjugation of the channels or frequency bands (where they are to lie in even numbered frequency bands).

This results in a plurality of partial frequency domain representations $S_{PRT1}$, $S_{PRT2}$ being generated (one for each IFFT or numerology desired). Each partial frequency domain representation defines, for each frequency band $b_1$, $b_2$, $b_3$ of the analog transport signal, a location of a subgroup of one or more channels therein (i.e. in the frequency domain).

There may be a need to coordinate between the different mappings of the partial frequency domain representations, to ensure that the mapping of different groups of channels to positions within the frequency domain representation of the transport signal does not result in channels overlapping (when the partial representations (or derived components) are combined).

Different portions of a frequency band may therefore be assigned or designated for different groups of channels (to avoid overlapping within a frequency band).

After being converted to the time domain by respective IFFTs to generate the respective components, a combination module 36 may perform a combination process on the components, in the digital domain, to generate the digital version $S_M$ of the analog transport signal. This is illustrated in Figure 4 (where a frequency domain plot of the digital version is illustrated for the sake of improved clarity). Such a combination is not required if only a single IFFT is used (i.e. only a single frequency domain representation is generated by the mapping device 33).

This combination may instead be performed in the analog domain. Thus, each partial frequency domain representation may be converted using an ADC, and then subsequently combined in the analog domain (as previously explained with reference to Figure 3).

Referring back to Figure 3, a Cyclic Prefix may be added to each partial frequency domain representation (or where only a single frequency domain representation is generated, to the frequency domain representation) by a Cyclic Prefix system 35. The (optional) Cyclic Prefix system 35 has been omitted from Figure 4 for the sake of clarity.

The (combined) output of the time domain conversion system (being a digital version of the analog transport signal) is converted to the analog domain by a digital-to-analog converter. Thus, multiplexing of the channels can occur entirely in the digital domain.

As previously explained, an time domain conversion system 34 is used to convert a frequency domain representation of the analog transport signal to a (digital) time domain signal, which can subsequently be converted by an ADC.

The time domain conversion system may use an IFFT that employs an IFFT sampling rate of $f_{sIFFT}$, thereby enabling (at a maximum) the mapping device to distribute channels between two IFFT Nyquist zones defined by the IFFT sampling rate (each IFFT Nyquist zone having a size of $f_{sIFFT}/2$). The IFFT Nyquist zones are symmetric in their number of frequency domain samples across the two zones. These IFFT Nyquist zones are separate from the frequency bands or Nyquist zones into which channels are divided for the transport signal, and have only been described to identify the bounds of the IFFT system. Of course, the sampling rate $f_{sIFFT}$ of the IFFT system is greater than the size of a frequency band.

The mapping device may interleave SSB- and DMT-derived channels. For example, there may be some intelligent processor that informs the mapping device as to which channels are DMT and SSB (to enable appropriate placement of the channels). However, any possible combination and/or placement of DMT and SSB-derived channels can be employed.

In embodiments formed of interleaved SSB and DMT-derived channels (i.e. where a single SSDB channel is followed by a single DMT channel), DMT-derived channels can be created so that corresponding channels in the two IFFT Nyquist zones are conjugate symmetric, leading to a maximum number m, of DMT channels. The SSB-derived channels are created such that corresponding groupings in the two IFFT Nyquist zones are not conjugate symmetric, leading to a maximum number 2m, of SSB-derived channels. With this technique there is no need for the use of analog or digital domain filters (for removing sidebands) or Hilbert transforms (typically used to create SSB signals).

Of course, any number of SSB or DMT channels may be placed by the mapping device, and it is not essential that SSB and DMT channels interleave. For example, one IFFT Nyquist zone may carry a first number of SSB channels and the second IFFT zone may carry a second, different number of SSB channels. It will be appreciated that the two IFFT zones each carry a same number of DMT half-channels, where each DMT half-channel corresponds to another DMT half-channel in the second IFFT zone (as two bands are required to carry a single channel).

It has been innovatively recognized that a single IFFT process (or other frequency domain to time domain conversion process) can be used to convert a frequency domain representation of an analog transport signal containing both SSB and DMT-derived channels. This reduces an amount of circuitry or processing power used to multiplex signals to form the analog transport signal. The concept of using a single IFFT process to simultaneously convert a frequency domain representation containing both SSB and DMT derived channels can be applied independently of the underlying inventive concept of appropriately mapping channels.

Thus, a single IFFT stage can generate an arbitrarily large OFDM signal multiplex, where the different individual signals are derived by Single Sideband (SSB) and/or Discrete Multi-tone Modulation (DMT), combining said signals seamlessly.

In particular, according to other concepts of the invention, there is provided a method of multiplexing a plurality of channels, comprising both DMT-derived and SSB-derived channels, to generate an analog transport signal, for communicating from a distributed unit to a remote radio unit of a fronthaul for a radio access network. The method comprises: constructing a single frequency domain representation of the analog transport signal by arranging each DMT-derived and SSB-derived channel at appropriate frequencies; converting the frequency domain representation of the analog transport signal to the time domain using a single time domain transform (e.g. a single IFFT), to thereby generate a digital version of the analog transport signal; performing a digital-to-analog process on the digital version of the analog transport signal to generate the analog transport signal.

Due to the mapping technique employed to create the analog transport signal, previously described, each channel or channel set can now be down-sampled (at the receiver of the RRU) down to the same intermediate frequency (e.g. at baseband) using a single down-sampling factor. In particular, the down-sampling process is performed by sampling at a frequency equal to twice the width of the frequency band. This results in each different frequency band effectively being transformed so as to lie within a frequency band beginning at 0Hz.

Of course, the down-sampling process may be performed by sampling at a frequency equal to any even number multiple (i.e. 2N, e.g. 2x, 4x and so on) of the width of the frequency band. This is conceptually the same as doubling the width of the frequency band.

In one example, to perform the down-sampling process, the analog transport signal is sampled using an analog-to-digital converter (ADC). The (digital) transport signal is then filtered to obtain a plurality of separate transport signals, each separate transport signal being filtered to contain only a single frequency band. Each separate transport signal is then sampled at a frequency equal to twice the width of the frequency band. This results in a plurality of down-sampled transport signals each having channels located at the same location as at least one other down-sampled transport signal. Each channel in the down-sampled transport signals can then be individually filtered in the digital domain to finalize the de-multiplexing of the transport signal.

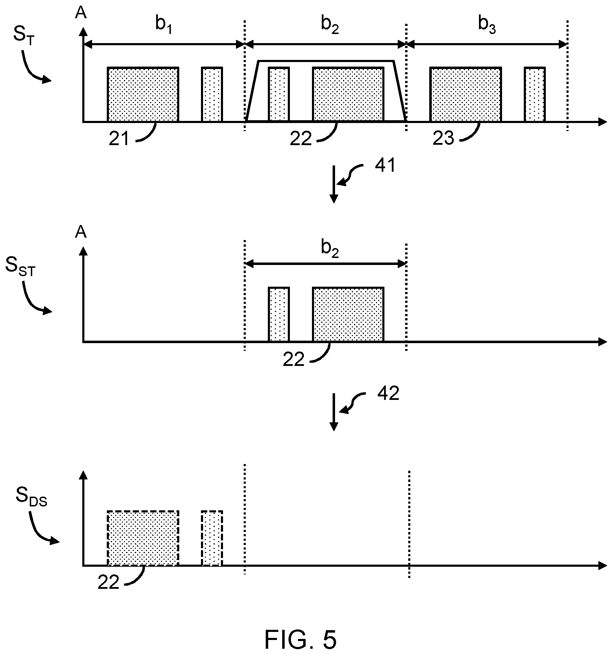

Figure 5 illustrates a concept for demultiplexing the transport signal generated as previously described. The transport signal $S_T$ has been digitized by an ADC.

Separate band-pass filters are applied, in a filtering step 41, to the transport signal $S_T$ to generate a plurality of filtered separate transport signals $S_{ST}$ (of which only one is illustrated). Each band-pass filter is adapted to filter out all frequencies except one of the predetermined frequency bands (e.g. the second predetermined frequency band $b_2$).

Each separate transport signal $S_{ST}$ is then down-sampled or decimated, in a down-sampling step 42, at a sampling rate equal to twice the width of the predetermined frequency band. This results in a down-sampled transport signal $S_{DS}$, in which a copy of the predetermined frequency band is introduced into the first Nyquist zone (i.e. into a frequency band spanning from 0Hz to a frequency equal to half the sampling rate), exploiting the aliasing effect. The size of the Nyquist zone is defined by the sampling rate, and accordingly by the predetermined frequency band. In particular, each Nyquist zone has a same width as the predetermined frequency band (by design).

The proposed method results in all frequency bands being individually processed (i.e. in separate signals) to result in a plurality of down-sampled transport signals (one for each frequency band) having at least a copy of the frequency band of interest in a band spanning from 0Hz to a frequency equal to half the sampling rate, i.e. the first Nyquist zone.

Each down-sampled transport signal can then undergo an additional digital filtering process (not shown) to individually filter out or obtain the channels. Thus, each channel within a channel set (assigned to a given frequency band) can be individually filtered in the digital domain.

Thus, when two or more channels are contained within a given predetermined frequency band, a second digital filtering stage, following down-sampling, can select the individual channels within the predetermined frequency band. The digital filters can be lowpass, band-pass or high-pass dependent on the location of channels within the frequency band.

The sampling rate of the ADC is preferably larger or equal to the sampling rate of the IFFT at the transmitter side but this need not be the case. Based on different choices of these two parameters different groupings are possible.

To summarize, due to the multiplexing technique carried out as described above with reference to Figure 2-4, all channels can be down-sampled to known intermediate frequencies. In particular, each channel of a given channel set is down-sampled to the same intermediate frequency as a respective channel of at least one other channel set.

This enables corresponding channel in different frequency bands (that are down-sampled to the same intermediate frequency) to be readily up-converted to the same RF/mmW frequency (through appropriate processing, for example, using DACs and quadrature mixers) using a single/common LO signal for all channels destined to the same RF/mmW frequency and with minimal per-channel processing (analog/digital up-/down-converters, mixers etc.).

Of course, individual channels within any given channel set will be at different intermediate frequencies following the down-sampling process. However, it is recognized that each individual channel will be at the same intermediate frequency as a corresponding channel of at least one other set (which will be present in a different signal). Thus, a same LO signal can be used for said corresponding channels.

Thus, the same process can be applied to each individual frequency band carrying the corresponding channels, as channels will be in a fixed and known position each time. This would simplify an operation of a RRU receiving the transport signal.

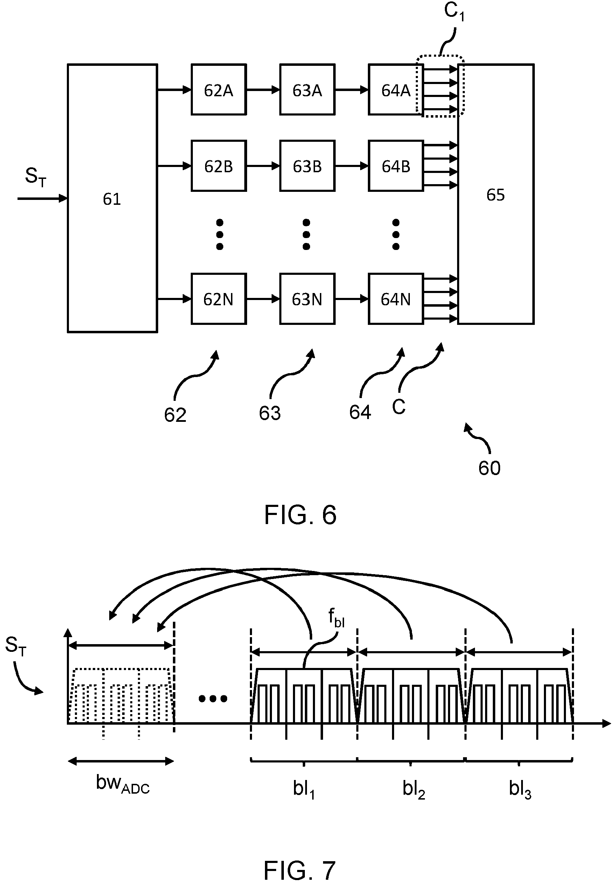

Figure 6 illustrates an architecture for a receiver 60 of the analog transport signal $S_T$ according to an embodiment. This architecture may, for example, be integrated into a RRU of a RAN.

The receiver comprises an analog-to-digital converter 61 (ADC). The ADC 61 receives the transport signal and samples and quantizes it, to allow for further digital processing.

The receiver 60 further comprises a bank of digital filters 62. Each digital filter receives a copy of the digitized transport signal (from the ADC 61) and filters it to isolate a respective individual frequency band (e.g. carrying a set of one or more channels). If only one channel is mapped into each frequency band of the transport signal, then each filter in the filter bank will filter out an individual channel. If n channels are mapped into each frequency band of the transport signal, each filter in the filter bank will filter out n channels.

Thus, each digital filter 62A-62N individually filters for a different frequency band from the transport signal, e.g. using a digital bandpass filter, as previously illustrated schematically in Figure 5.

Each filtered frequency band is then sent to a respective down-sampling device 63A - 63N (which forms part of a bank 63 of down-sampling devices). Each down-sampling device 63A - 63N down-samples an individual frequency band (i.e. channel or set of n channels) down to the same lower intermediate frequency. In this way, each frequency band, although originally occupying different parts of the frequency spectrum, are now down-sampled to the same frequency band (the first Nyquist zone) due to the specific mapping of the channels into frequency bands of the transport signal as previously described. Each separate signal (containing one frequency band) is effectively undersampled in the digital domain, using the aliasing effect to bring it down to the first Nyquist zone.

A second bank 64 of digital filters 64A-64N then filters each individual channel from the channel set (carried by the down-sampled frequency band). For one channel per frequency band, this filter bank can be used to remove additive noise. For a set, n, of channels within each frequency band, this second bank of filter additionally filters (or "selects" individual channels).

For the sake of illustration only, each digital filter 64A-64N is illustrated as filtering four separate channels (e.g. it is assumed that each frequency band carries no more than four different channels). However, any number of channels may be present in a frequency band in different embodiments, according to the implementation details.

The resulting filtered channels are sent to a further processing device 65, which performs all of the remaining processing, which processing is dependent upon application.

For example, in the case of a wireless channel with mMIMO transmission, each channel that now is present at the same intermediate frequency (IF) could be converted to the analog domain (through a DAC) and up-converted to an RF/mmW frequency using a single local oscillator (LO) signal.

Alternatively, different channels within a channel set can be up-converted to a different mmW/RF frequency whereby a different LO signal is used for a channel destined for different RF/mmW channels. It has previously been explained how each channel of a set of channels can correspond with a respective channel of at least one other set of channels (e.g. be encoded in the same manner or associated with the same IFFT process at the transmitter). Corresponding channels may be associated with the same mmW/RF frequency and can therefore each be up-converted to said mmW/RF frequency using a same single mmW/RF LO signal. This simplifies an operation at the RRU.

The previously described architecture for generating and processing a transport signal $S_T$ may be limited in that the maximum overall bandwidth of the transport signal $S_T$ is limited by the bandwidth of the analog-to-digital converter used to demultiplex the transport signal. This is because the transport signal $S_T$ needs to be converted using an ADC before it can be demultiplexed into individual frequency bands carrying channels and, subsequently, into individual channels.

To overcome this limitation, the present invention also proposes a concept for increasing an effective bandwidth of an analog-to-digital converter used to demultiplex the analog transport signal, thereby increasing an effective or permissible bandwidth of the transport signal. The proposed concept exploits the capability of a time domain sampling device (such as a sample and hold amplifier or a track and hold amplifier) to effectively downshift or down-sample an entire band or block of frequencies.

One or more blocks (of frequencies) of the transport signal are identified. The size (bandwidth) of each block is no greater than (and is preferably equal to) the bandwidth of the analog-to-digital converter for demultiplexing the transport signal (e.g. at the RRU). In the context of the present invention, each block comprises a whole number of frequency bands. Thus, the bandwidth of each block may be a multiple of the bandwidth of a frequency band (as frequency bands are consecutive).

The signal is filtered to isolate each block in a separate filtered transport signal (each therefore carrying only a single block). This filtering is performed by an analog filter, e.g. a passive filter. For most applications (e.g. mMIMO), and assuming sampling rates of commercially available ADCs, the required number of analog filters will be small and therefore cheap.

Each filtered signal is processed by a time domain sampling device, such as a track and hold amplifier. As is known, a track and hold amplifier samples a received signal (here a filtered transport signal) but does not quantize it. The track and hold amplifier effectively downshifts (a center frequency of) the filtered signal to a predetermined frequency (which will be the same for each block). Each downshifted filtered transport signal can then be processed using any previously described method of processing a transport signal (e.g. employing the method or architecture described with reference to Figs 5 and 6).

In this way, each block can be shifted to the same lower band of frequencies, which lies within the bandwidth of the analog-to-digital converter. This enables any arbitrary frequency (even above the bandwidth of the ADC) to be used for the transport signal. Thus, channels can be placed on the transport signal at frequencies greater than the bandwidth of a receiving analog-to-digital converter, and still be processed by the analog-to-digital converter. This can be considered as increasing the effective bandwidth of the analog-to-digital converter.

After the first downshifting stage, the downshifted transport signals are individually processed according to the techniques previously described. Thus, the time domain sampling devices offer flexibility in placement of channels on the transport signal and enables flexibility of design for the creation of even larger multiplexes (or super-multiplexes), that are not limited by ADC sampling rate and/or analog bandwidth constraints.

In particular, where only a single block is used or identified (in the transport signal), the frequency bands can be positioned (by the mapping device or in the analog domain by an RF upconverter device within the digital-to-analog converter) at a high frequency in the transport signal, so that lower frequencies carry no frequency bands, and can then be downshifted by the receiver. This mitigates the effect of low frequency noise (such as 1/f noise or mains supply noise), as such low frequency noise can be filtered out, thereby improving a signal to noise ratio.

If two or more blocks are identified, this further enables a "super-multiplex" approach to be used, where more than one block of frequencies (each smaller or equal to the size of the bandwidth of the ADC) can carry channels. This increases the carrying capability of the transport signal.

The architecture of the transmitter (e.g. the DU) may be appropriately adapted to place the channels into more than one block of the transport signal, where a single block is sized to have a bandwidth no greater than the bandwidth of the ADC. Preferably, the bandwidth of the block is equal to the bandwidth of the ADC.

Figure 7 illustrates a concept of increasing an effective bandwidth of an ADC. In particular, Figure 7 illustrates a transport signal $S_T$ that employs the above-described concept for increasing an effective bandwidth of the ADC, whilst also enabling a greater number of channels to be demultiplexed from the transport signal (and accordingly, carried by the transport signal).

The actual bandwidth of the ADC is illustrated as $bw_{ADC}$.

The transport signal carries different blocks $bl_1$, $bl_2$, $bl_3$ of frequency bands. Each block is separately filtered, e.g. by an analog filter $f_{b1}$. The filtered result can be down-sampled by a time-domain sampling device, e.g. a track and hold amplifier (THA). This effectively downshifts the filtered block to have a predetermined intermediate frequency. This intermediate frequency is selected so that the new bandwidth of downshifting filtered block falls within the bandwidth of the ADC.

The bandwidth of a block is no greater than the bandwidth of the ADC. To maximize efficiency, the bandwidth of a block may be equal to the bandwidth of the ADC.

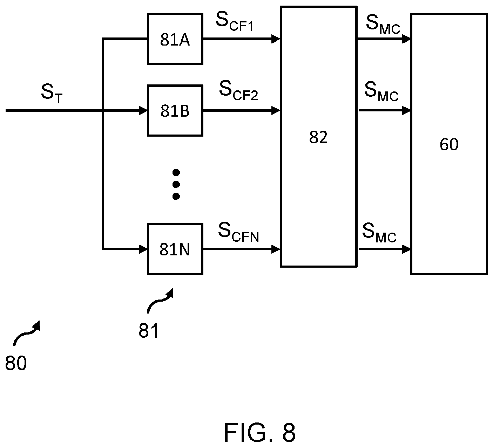

Figure 8 illustrates an architecture 80 for increasing an effective bandwidth of an ADC.

The transport signal $S_T$ is passed to a bank 81 of analog filters 81A-81N, each of which filters a respective block to generate a filtered transport signal $S_{CF1}$ - $S_{CFN}$. Each filtered transport signal is then down-sampled by a time-domain sampling device 82.

The down-sampled filtered transport signals are then passed to an ADC of the receiver 60 for further processing (e.g. using previously described methods).

The techniques described herein can be employed within a Network Function Virtualization (NFV) framework with (or without) network slicing techniques. For example, control elements may be distributed within the fronthaul system. Frequency bands (into which channels are positioned) become "resources" available to serve user demands (e.g. throughput, throughput enhancement through MIMO) and dynamically adjustable so that "resources" can be created, adjusted and destroyed according to demand using Software-Defined Radio (SDR) approaches. As such the network can more efficiently use the available processing resources and reduce energy consumption. Other possible parameters for adjustment include: multiplexing and mapping parameters, size of frequency bands, size of blocks, bandwidth of channels. These are associated directly with sampling rates and down-sampling factors available at the receiver side as previously described, all of which can be dynamically adapted using SDR approaches resulting in more efficient use of available resources and reducing energy consumption.

The invention may be applied across a range of applications.

For example, in a general fronthaul application, a transport signal may be used where a large number of 4G and/or 5G signals and/or signal-types need to be transported to a RRU through a common medium (fiber or electrical connection). These signals may comprise a combination of different bandwidths, different numerologies and may be destined for the same and/or different RF and/or mmW frequencies (or channels) over a wireless link.

In another example, channels may be destined for MIMO or mMIMO or transmit diversity transmitters (such as remote antenna units) whereby each of a group of channels have to be upconverted to the same RF and/or mmW frequency. The mapping approach could split subgroups (e.g. carrying a single channel) of the group of channels across different frequency bands so that, when a respective frequency band is downsampled, each subgroup is downsampled to the same intermediate frequency. This enables the upconversion to employ a single RF and/or mmW local oscillator signal (as an intermediate frequency of each of the group of channels is the same), thus simplifying receiver processing (e.g. mixers, up-/down-converters, filters, digital or analog).

Embodiments may be employed where individual channels or groups of channels need to be transmitted by an RRU using different RAT technologies, for example WiFi in combination with LTE and 5G. These technologies may or may not use the same numerologies. If using different numerologies, so that a different sampling rate is required for each channel (or group of channels), individual IFFTs can be used to create separate partial frequency domain representations, each IFFT employing a different sampling rate and numerology which can then be combined (in the analog or digital domain) to form a single transportation signal for transporting all the signals destined for the different RATs. Then, channels or channel sets can be up-converted to the required RF and/or mmW channel, according to RAT, using the same LO stage. This can be combined with multi-antenna techniques whereby groups of signals are upconverted to the same RF and/or mmW channel.

By employing the described frequency band mapping techniques, the receiver can use an arbitrary (low) sampling rate and/or analog bandwidth specification ADC, by exploiting the block-based down sampling approach described above. Based on the specifications of the ADC, frequency band mapping is carried out so that the ADC(s) at the receiver can sample (or just quantize) each channel set of a frequency band.

Certain analog fiber communication links may result in detrimental performance when a signal or signal multiplex at a low intermediate frequency is used to modulate, by external modulation or direct modulation, an optical source (such as a CW laser, or laser-diode source). By employing the described frequency block mapping methodology, channels can be positioned at an arbitrary (low or high) intermediate frequency prior to modulation of the light source. Through the use of a time domain sampling device, the channels can be repositioned (after transport) to an intermediate frequency that is within the ADC specifications thus allowing the receiver to process these signals.

Embodiments may be used to transport time domain IQ samples or data (e.g. from other Radio Access Network functional splits) between a DU and a RRU., The IQ samples or data may be modulated using OFDM/DMT onto optical carriers for spectrally-efficient, lower-cost high-speed transport, but with the channels for different RATs again placed in the requisite positions in different frequency bands or Nyquist zones, thereby enabling the receiving end to obtain multiple, parallel lower data rate signals for each RAT. Thus, a 5G signal at the receiver end may be de-multiplexed into multiple, parallel 1 Gb/s or 10 Gb/s signals (one from each Nyquist zone) corresponding to different spatial streams. An LTE-A-Pro signal may be de-multiplexed into multiple 1 Gb/s signals (one from each Nyquist zone), corresponding to different spatial streams.

An NFV orchestrator can be used to adjust parameters of a receiver (e.g. a sampling rate, decimation or down-sampling factors, digital filter parameters etc.), using SDR techniques, in a dynamic or semi-dynamic fashion. The NFV orchestrator can then inform the transmitter of the transport signal (e.g. the CU) to appropriate define frequency bands and map channels to meet the controlled parameters of the receiver. In other words, frequency bands become a "resource" that, based on network-wide conditions and informed by the orchestrator, can be re-sized and adjusted to fulfill dynamic user requirements.

Throughout the above-described embodiments, especially for steps performed by a receiver of the transport signal, time-domain multiplexed processing and parallel processing are both valid realizations of the invention. Processes performed in the digital domain may be performed in parallel or in series.

The herein proposed mapping, multiplexing and demultiplexing methodologies and concepts can be used in indoor and outdoor distributed antenna systems (DAS) and/or antenna remoting applications where a number of channels need to be transported from a distributed unit (or central location) to a remote unit such as a remote antenna unit RAU. An exemplary implementation may be in neutral-host infrastructure/networks.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

**Claims**

1. A method of multiplexing a plurality of channels ($C_1$, $C_2$, $C_N$), wherein the channels can have different bandwidths, to generate an analog transport signal ($S_T$), for communicating from a distributed unit to a remote radio unit of a fronthaul for a radio access network (10), the method comprising:

   dividing the plurality of channels into channel sets ($SG_1$, $SG_2$, $SG_3$);
   defining a plurality of frequency bands ($b_1$, $b_2$, $b_3$, $b_n$) within the analog transport signal, each frequency band being of the same predetermined width and immediately abutting another of the plurality of frequency bands;
   assigning a respective frequency band to each channel set;
   constructing a frequency domain representation of the analog transport signal by, for each channel set, arranging each channel within the frequency band assigned to the channel set so that, if the analog transport signal is sampled at a frequency equal to twice the predetermined width, each channel of each channel set has the same center frequency as a corresponding channel of at least one other channel set; and
   generating the analog transport signal by converting the frequency domain representation of the analog transport signal to the time domain.

2. The method of claim 1, wherein the step of constructing the frequency domain representation comprises, for each channel set ($SG_1$, $SG_2$, $SG_3$), arranging each channel ($C_1$, $C_2$, $C_N$) within the frequency band ($b_1$, $b_2$, $b_3$, $b_n$) assigned to the channel set so that, if the analog transport signal ($S_T$) is sampled at the frequency equal to twice the predetermined width, each channel of each channel set wholly overlaps the corresponding channel of each at least one other channel set.

3. The method of claim 1 or 2, wherein each channel ($C_1$, $C_2$, $C_N$) of each channel set ($SG_1$, $SG_2$, $SG_3$) is modulated according to the same modulation scheme as the corresponding channel of each at least one other channel set.

4. The method of any of claims 1 to 3, wherein the predetermined width is no less than the summed width of each signal within a single channel set ($SG_1$, $SG_2$, $SG_3$).

5. The method of any of claims 1 to 4, wherein the step of constructing the frequency domain representation is performed so that, for each channel set ($SG_1$, $SG_2$, $SG_3$), each channel ($C_1$, $C_2$, $C_N$) is located at the same relative location within the frequency band ($b_1$, $b_2$, $b_3$, $b_n$) as the corresponding channel of each at least one other channel set,

6. The method of claim 5, wherein the step of constructing the frequency domain representation further comprises, performing flipping and/or conjugation on channels located in alternate frequency bands.

7. The method of any of claims 1 to 6, wherein the step of converting the frequency domain representation comprises converting the frequency domain representation using a single time domain transform (34A, 34B, 34N) to convert the frequency domain representation to the time domain,

8. The method of claim 7, wherein the plurality of channels ($C_1$, $C_2$, $C_N$) comprises both DMT-derived and SSB-derived channels.

9. A method of demultiplexing an analog transport signal ($S_T$) generated by performing the method of any previous claim, the method comprising:

receiving the analog transport signal;
performing analog-to-digital conversion on the analog transport signal using an analog-to digital converter (61), to produce a digitized signal;
digitally filtering the digitized signal to obtain a separate signal ($S_{ST}$) for each frequency band ($b_1$, $b_2$, $b_3$, $b_n$);
sampling each separate signal at a sampling frequency equal to twice the predetermined width to obtain a down-sampled copy ($S_{DS}$) of each frequency band,
for each down-sampled copy ($S_{DS}$) of each frequency band ($b_1$, $b_2$, $b_3$, $b_n$), performing individual filtering to obtain each channel of the down-sampled copy, wherein the channels can have different bandwidths.

10. A method of demultiplexing an analog transport signal ($S_T$) generated by performing the method of any of claims 1 to 8, the method comprising:

defining two or more blocks of frequencies ($bl_1$, $bl_2$, $bl_3$) in the analog transport signal, each block being of the same predetermined bandwidth and each comprising a whole number of frequency bands ($b_1$, $b_2$, $b_3$, $b_n$), wherein the one or more blocks of the analog transport signal together carry the plurality of channels ($C_1$, $C_2$, $C_N$);
for each block of the analog transport signal ($S_T$), filtering the analog transport signal to generate a respective filtered transport signal ($S_{CF1}$, $S_{CF2}$, $S_{CFN}$) containing the respective block of the analog transport signal; and
performing a demultiplexing operation on each respective filtered transport signal comprising:

performing a time-domain sampling operation on the filtered transport signal, to produce a down-shifted analog signal comprising a block of the analog transport signal;
performing analog-to-digital conversion on the down-shifted analog signal using an analog-to digital converter (61), to produce a digitized down-shifted signal;
digitally filtering the digitized down-shifted signal to obtain separate signals ($S_{ST}$) for each frequency band carried by the digitized down-shifted signal; and
sampling each separate signal at a sampling frequency equal to twice the predetermined width to obtain a down-sampled copy ($S_{DS}$) of each frequency band.

11. A method of communicating between a distributed unit (210) and a remote radio unit (100) of a fronthaul for a radio access network (10), the method comprising:

multiplexing a plurality of channels ($C_1$, $C_2$, $C_N$) to generate an analog transport signal ($S_T$) by performing, by a distributed unit, the method of any of claims 1 to 8;
transmitting the analog transport signal from the distributed unit to the remote radio unit; and
demultiplexing the analog transport signal by performing, by the remote radio unit, the method of any of claims 9 to 10.

12. A distributed unit (210) for multiplexing a plurality of channels ($C_1$, $C_2$, $C_N$), wherein the channels can have different bandwidths, onto an analog transport signal ($S_T$) for communicating with a remote radio unit (100) of a fronthaul for a radio access network (10), the distributed unit comprising a processor adapted to:

divide the plurality of channels into channel sets ($SG_1$, $SG_2$, $SG_3$);
define a plurality of frequency bands ($b_1$, $b_2$, $b_3$, $b_n$) within the analog transport signal, each frequency band being of the same predetermined width and immediately abutting another frequency band;
assign a respective frequency band to each channel set;
construct a frequency domain representation of the analog transport signal by for each channel set, arranging each channel within the frequency band assigned to the channel set so that, if the analog transport signal is sampled at a frequency equal to twice the predetermined width, each channel of each channel set has the same intermediate frequency as a corresponding channel of at least one other channel set; and
generate the analog transport signal by converting the frequency domain representation of the analog transport signal to the time domain.

13. A remote radio unit (100) adapted to receive an analog transport signal ($S_T$) generated by the distributed unit (210) of claim 12, the remote radio unit comprising a processor adapted to:

receive the analog transport signal;
perform an analog-to-digital conversion on the analog transport signal using an analog-to digital converter (61);
digitally filter each frequency band ($b_1$, $b_2$, $b_3$, $b_n$) to obtain separate signals ($S_{ST}$) for each frequency band;

sample each separate signal at a sampling frequency equal to twice the predetermined width to obtain a down-sampled copy of each frequency band; and

for each down-sampled copy ($S_{DS}$) of each frequency band ($b_1$, $b_2$, $b_3$, $b_n$), perform individual filtering to obtain each channel of the down-sampled copy, wherein the channels can have different bandwidths.

**14.** A remote radio unit (100) adapted to receive an analog transport signal ($S_T$) generated by the distributed unit (210) of claim 12, the remote radio unit comprising a processor adapted to:

define two or more blocks of frequencies ($bl_1$, $bl_2$, $bl_3$) in the analog transport signal, each block being of the same predetermined bandwidth and each comprising a whole number of frequency bands ($b_1$, $b_2$, $b_3$, $b_n$), wherein the one or more blocks of the analog transport signal together carry the plurality of channels ($C_1$, $C_2$, $C_N$);

for each block of the analog transport signal ($S_T$), filter the analog transport signal to generate a respective filtered transport signal ($S_{CF1}$, $S_{CF2}$, $S_{CFN}$) containing the respective block of the analog transport signal; and

perform a demultiplexing operation on each respective filtered transport signal comprising:

performing a time-domain sampling operation on the filtered transport signal, to produce a down-shifted analog signal comprising a block of the filtered transport signal;

performing analog-to-digital conversion on the down-shifted analog signal using an analog-to digital converter (61), to produce a digitized down-shifted signal;

digitally filtering the digitized down-shifted signal to obtain separate signals ($S_{ST}$) for each frequency band carried by the digitized down-shifted signal; and

sampling each separate signal at a sampling frequency equal to twice the predetermined width to obtain a down-sampled copy of each frequency band.

**15.** A fronthaul for a radio access network (10), the fronthaul comprising:

a distributed unit (210) according to claim 12;

a remote radio unit (100) according to claim 13 or 14; and

a communication channel for carrying the analog transport signal ($S_T$) between the distributed unit and the remote radio unit.

**Patentansprüche**

**1.** Verfahren zum Multiplexen einer Vielzahl von Kanälen ($C_1$, $C_2$, $C_N$), wobei die Kanäle unterschiedliche Bandbreiten aufweisen können, um ein analoges Transportsignal ($S_T$) zum Kommunizieren von einer verteilten Einheit zu einer entfernten Funkeinheit eines Fronthauls für ein Funkzugangsnetzwerk (10) zu erzeugen, wobei das Verfahren Folgendes umfasst:

Aufteilen der Vielzahl von Kanälen in Kanalsätze ($SG_1$, $SG_2$, $SG_3$);

Definieren einer Vielzahl von Frequenzbändern ($b_1$, $b_2$, $b_3$, $b_n$) innerhalb des analogen Transportsignals, wobei jedes Frequenzband dieselbe vorbestimmte Breite aufweist und unmittelbar an ein anderes der Vielzahl von Frequenzbändern angrenzt;

Zuweisen eines jeweiligen Frequenzbands zu jedem Kanalsatz;

Konstruieren einer Frequenzbereichsdarstellung des analogen Transportsignals durch Anordnen jedes Kanals innerhalb des dem Kanalsatz zugewiesenen Frequenzbands für jeden Kanalsatz, sodass, wenn das analoge Transportsignal mit einer Frequenz abgetastet wird, die gleich dem Doppelten der vorbestimmten Breite ist, jeder Kanal jedes Kanalsatzes dieselbe Mittenfrequenz wie ein entsprechender Kanal mindestens eines anderen Kanalsatzes aufweist; und

Erzeugen des analogen Transportsignals durch Umwandeln der Frequenzbereichsdarstellung des analogen Transportsignals in den Zeitbereich.

**2.** Verfahren nach Anspruch 1, wobei der Schritt des Konstruierens der Frequenzbereichsdarstellung für jeden Kanalsatz ($SG_1$, $SG_2$, $SG_3$) Anordnen jedes Kanals ($C_1$, $C_2$, Crr) innerhalb des Frequenzbands ($b_1$, $b_2$, $b_3$, $b_n$), der dem Kanalsatz zugewiesen ist, umfasst, sodass, wenn das analoge Transportsignal ($S_T$) mit der Frequenz abgetastet wird, die gleich dem Doppelten der vorbestimmten Breite ist, jeder Kanal jedes Kanalsatzes den entsprechenden Kanal jedes mindestens einen anderen Kanalsatzes vollständig überlappt.

3. Verfahren nach Anspruch 1 oder 2, wobei jeder Kanal ($C_1$, $C_2$, $C_N$) jedes Kanalsatzes ($SG_1$, $SG_2$, $SG_3$) nach demselben Modulationsschema moduliert wird wie der entsprechende Kanal jedes mindestens einen anderen Kanalsatzes.

4. Verfahren nach einem der Ansprüche 1 bis 3, wobei die vorbestimmten Breite nicht kleiner ist als die summierte Breite jedes Signals innerhalb eines einzelnen Kanalsatzes ($SG_1$, $SG_2$, $SG_3$).

5. Verfahren nach einem der Ansprüche 1 bis 4, wobei der Schritt des Konstruierens der Frequenzbereichsdarstellung so durchgeführt wird, dass sich für jeden Kanalsatz ($SG_1$, $SG_2$, $SG_3$) jeder Kanal ($C_1$, $C_2$, $C_N$) an derselben relative Lage innerhalb des Frequenzbands ($b_1$, $b_2$, $b_3$, $b_n$) befindet wie der entsprechende Kanal jedes mindestens einen anderen Kanalsatzes.

6. Verfahren nach Anspruch 5, wobei der Schritt des Konstruierens der Frequenzbereichsdarstellung ferner Durchführen von Umdrehen und/oder Konjugieren auf Kanälen umfasst, die sich in alternativen Frequenzbändern befinden.

7. Verfahren nach einem der Ansprüche 1 bis 6, wobei der Schritt des Umwandelns der Frequenzbereichsdarstellung Umwandeln der Frequenzbereichsdarstellung unter Verwendung einer einzigen Zeitbereichstransformation (34A, 34B, 34N) umfasst, um die Frequenzbereichsdarstellung in den Zeitbereich umzuwandeln.

8. Verfahren nach Anspruch 7, wobei die Vielzahl von Kanälen ($C_1$, $C_2$, $C_N$) sowohl DMTabgeleitete als auch SSB-abgeleitete Kanäle umfassen.

9. Verfahren zum Demultiplexen eines analogen Transportsignals ($S_T$), das durch Durchführen des Verfahrens nach einem der vorhergehenden Ansprüche erzeugt wird, wobei das Verfahren Folgendes umfasst:

   Empfangen des analogen Transportsignals;
   Durchführen einer Analog-Digital-Umwandlung des analogen Transportsignals unter Verwendung eines Analog-Digital-Wandlers (61), um ein digitalisiertes Signal zu generieren;
   digitales Filtern des digitalisierten Signals, um ein separates Signal ($S_{ST}$) für jedes Frequenzband ($b_1$, $b_2$, $b_3$, $b_n$) zu erhalten;
   Abtasten jedes separaten Signals mit einer Abtastfrequenz, die gleich dem Doppelten der vorbestimmten Breite ist, um eine herunterabgetastete Kopie ($S_{DS}$) jedes Frequenzbands zu erhalten,
   Durchführen einer individuellen Filterung für jede herunterabgetastete Kopie ($S_{DS}$) jedes Frequenzbands ($b_1$, $b_2$, $b_3$, $b_n$), um jeden Kanal der herunterabgetasteten Kopie zu erhalten, wobei die Kanäle unterschiedliche Bandbreiten aufweisen können.

10. Verfahren zum Demultiplexen eines analogen Transportsignals ($S_T$), das durch Durchführen des Verfahrens nach einem der Ansprüche 1 bis 8 erzeugt wird, wobei das Verfahren Folgendes umfasst:

    Definieren von zwei oder mehr Frequenzblöcken ($bl_1$, $bl_2$, $bl_3$) in dem analogen Transportsignal, wobei jeder Block dieselbe vorbestimmte Bandbreite aufweist und jeder eine ganze Anzahl von Frequenzbändern ($b_1$, $b_2$, $b_3$, $b_n$) umfasst, wobei das eine oder die mehreren Blöcke des analogen Transportsignals zusammen die Vielzahl von Kanälen ($C_1$, $C_2$, $C_N$) tragen;
    Filtern des analogen Transportsignals für jeden Block des analogen Transportsignals ($S_T$), um ein entsprechendes gefiltertes Transportsignal ($S_{CF1}$, $S_{CF2}$, $S_{CFN}$) zu erzeugen, das den jeweiligen Block des analogen Transportsignals enthält; und
    Durchführen einer Demultiplexierungsoperation an jedem jeweiligen gefilterten Transportsignal, umfassend:

       Durchführen einer Abtastoperation im Zeitbereich an dem gefilterten Transportsignal, um ein heruntergeschaltetes analoges Signal zu generieren, das einen Block des analogen Transportsignals umfasst;
       Durchführen einer Analog-Digital-Umwandlung des heruntergeschalteten analogen Signals unter Verwendung eines Analog-Digital-Wandlers (61), um ein digitalisiertes, heruntergeschaltetes Signal zu generieren;
       digitales Filtern des digitalisierten, heruntergeschalteten Signals, um separate Signale ($S_{ST}$) für jedes Frequenzband zu erhalten, das von dem digitalisierten, heruntergeschalteten Signal getragen wird; und
       Abtasten jedes separaten Signals mit einer Abtastfrequenz, die gleich dem Doppelten der vorbestimmten Breite ist, um eine herunterabgetastete Kopie ($S_{DS}$) jedes Frequenzbands zu erhalten.

11. Verfahren zum Kommunizieren zwischen einer verteilten Einheit (210) und einer entfernten Funkeinheit (100) eines Fronthauls für ein Funkzugangsnetzwerk (10), wobei das Verfahren Folgendes umfasst:

Multiplexen einer Vielzahl von Kanälen ($C_1$, $C_2$, $C_N$), um ein analoges Transportsignal ($S_T$) zu erzeugen, indem das Verfahren nach einem der Ansprüche 1 bis 8 durch eine verteilte Einheit durchgeführt wird;
Übertragen des analogen Transportsignals von der verteilten Einheit zu der entfernten Funkeinheit; und
Demultiplexen des analogen Transportsignals durch Durchführen des Verfahrens nach einem der Ansprüche 9 bis 10 durch die entfernte Funkeinheit.

12. Verteilte Einheit (210) zum Multiplexen einer Vielzahl von Kanälen ($C_1$, $C_2$, $C_N$),wobei die Kanäle unterschiedliche Bandbreiten aufweisen können, auf ein analoges Transportsignal ($S_T$) zum Kommunizieren mit einer entfernten Funkeinheit (100) eines Fronthauls für ein Funkzugangsnetzwerk (10), wobei die verteilte Einheit einen Prozessor umfasst, der zu Folgendem angepasst ist:

Aufteilen der Vielzahl von Kanälen in Kanalsätze ($SG_1$, $SG_2$, $SG_3$);
Definieren einer Vielzahl von Frequenzbändern ($b_1$, $b_2$, $b_3$, $b_n$) innerhalb des analogen Transportsignals, wobei jedes Frequenzband dieselbe vorbestimmte Breite aufweist und unmittelbar an ein anderes Frequenzband angrenzt;
Zuweisen eines jeweiligen Frequenzbands zu jedem Kanalsatz;
Konstruieren einer Frequenzbereichsdarstellung des analogen Transportsignals durch Anordnen jedes Kanals innerhalb des dem Kanalsatz zugewiesenen Frequenzbands für jeden Kanalsatz, sodass, wenn das analoge Transportsignal mit einer Frequenz abgetastet wird, die gleich dem Doppelten der vorbestimmten Breite ist, jeder Kanal jedes Kanalsatzes dieselbe Zwischenfrequenz wie ein entsprechender Kanal mindestens eines anderen Kanalsatzes aufweist; und
Erzeugen des analogen Transportsignals durch Umwandeln der Frequenzbereichsdarstellung des analogen Transportsignals in den Zeitbereich.

13. Entfernte Funkeinheit (100), die dazu angepasst ist, ein analoges Transportsignal ($S_T$) zu empfangen, das durch die verteilte Einheit (210) nach Anspruch 12 erzeugt wird, wobei die entfernte Funkeinheit einen Prozessor umfasst, der zu Folgendem angepasst ist:

Empfangen des analogen Transportsignals;
Durchführen einer Analog-Digital-Umwandlung des analogen Transportsignals unter Verwendung eines Analog-Digital-Wandlers (61);
digitales Filtern jedes Frequenzbands ($b_1$, $b_2$, $b_3$, $b_n$), um separate Signale ($S_{ST}$) für jedes Frequenzband zu erhalten;
Abtasten jedes separaten Signals mit einer Abtastfrequenz, die gleich dem Doppelten der vorbestimmten Breite ist, um eine herunterabgetastete Kopie jedes Frequenzbands zu erhalten; und
Durchführen einer individuellen Filterung für jede herunterabgetastete Kopie ($S_{DS}$) jedes Frequenzbands ($b_1$, $b_2$, $b_3$, $b_n$), um jeden Kanal der herunterabgetasteten Kopie zu erhalten, wobei die Kanäle unterschiedliche Bandbreiten aufweisen können.

14. Entfernte Funkeinheit (100), die dazu angepasst ist, ein analoges Transportsignal ($S_T$) zu empfangen, das durch die verteilte Einheit (210) nach Anspruch 12 erzeugt wird, wobei die entfernte Funkeinheit einen Prozessor umfasst, der zu Folgendem angepasst ist:

Definieren von zwei oder mehr Frequenzblöcken ($bl_1$, $bl_2$, $bl_3$) in dem analogen Transportsignal, wobei jeder Block dieselbe vorbestimmte Bandbreite aufweist und jeder eine ganze Anzahl von Frequenzbändern ($b_1$, $b_2$, $b_3$, $b_n$) umfasst, wobei das eine oder die mehreren Blöcke des analogen Transportsignals zusammen die Vielzahl von Kanälen ($C_1$, $C_2$, $C_N$) tragen;
Filtern des analogen Transportsignals für jeden Block des analogen Transportsignals ($S_T$), um ein entsprechendes gefiltertes Transportsignal ($S_{CF1}$, $S_{CF2}$, $S_{CFN}$) zu erzeugen, das den jeweiligen Block des analogen Transportsignals enthält; und
Durchführen einer Demultiplexierungsoperation an jedem jeweiligen gefilterten Transportsignal, umfassend:

Durchführen einer Abtastoperation im Zeitbereich an dem gefilterten Transportsignal, um ein heruntergeschaltetes analoges Signal zu generieren, das einen Block des gefilterten Transportsignals umfasst;
Durchführen einer Analog-Digital-Umwandlung des heruntergeschalteten analogen Signals unter Verwendung eines Analog-Digital-Wandlers (61), um ein digitalisiertes, herunterabgetastetes Signal zu generieren;

digitales Filtern des digitalisierten, herunterabgetasteten Signals, um separate Signale ($S_{ST}$) für jedes Frequenzband zu erhalten, das von dem digitalisierten, herunterabgetasteten Signal getragen wird; und

Abtasten jedes separaten Signals mit einer Abtastfrequenz, die gleich dem Doppelten der vorbestimmten Breite ist, um eine herunterabgetastete Kopie jedes Frequenzbands zu erhalten.

15. Fronthaul für ein Funkzugangsnetzwerk (10), wobei das Fronthaul Folgendes umfasst:

eine verteilte Einheit (210) nach Anspruch 12;
eine entfernte Funkeinheit (100) nach Anspruch 13 oder 14; und
einen Kommunikationskanal zum Tragen des analogen Transportsignals ($S_T$) zwischen der verteilten Einheit und der entfernten Funkeinheit.

## Revendications

1. Procédé de multiplexage d'une pluralité de canaux ($C_1$, $C_2$, $C_N$), dans lequel les canaux peuvent avoir des largeurs de bande différentes, pour générer un signal de transport analogique ($S_T$), pour la communication d'une unité distribuée à une unité radio distante d'un fronthaul pour un réseau d'accès radio (10), le procédé comprenant :

la division de la pluralité de canaux en ensembles de canaux ($SG_1$, $SG_2$, $SG_3$) ;
la définition d'une pluralité de bandes de fréquences ($b_1$, $b_2$, $b_3$, $b_n$) dans le signal de transport analogique, chaque bande de fréquences comportant la même largeur prédéterminée et étant immédiatement adjacente à une autre de la pluralité de bandes de fréquences ;
l'attribution d'une bande de fréquence respective à chaque ensemble de canaux ;
la construction d'une représentation dans le domaine fréquentiel du signal de transport analogique en agençant, pour chaque ensemble de canaux, chaque canal dans la bande de fréquences attribuée à l'ensemble de canaux de telle sorte que, si le signal de transport analogique est échantillonné à une fréquence égale à deux fois la largeur prédéterminée, chaque canal de chaque ensemble de canaux comporte la même fréquence centrale qu'un canal correspondant d'au moins un autre ensemble de canaux ; et
la génération du signal de transport analogique en convertissant la représentation dans le domaine fréquentiel du signal de transport analogique dans le domaine temporel.

2. Procédé selon la revendication 1, dans lequel l'étape de construction de la représentation dans le domaine fréquentiel comprend, pour chaque ensemble de canaux ($SG_1$, $SG_2$, $SG_3$), l'agencement de chaque canal ($C_1$, $C_2$, $C_N$) dans la bande de fréquences ($b_1$, $b_2$, $b_3$, $b_n$) attribuée à l'ensemble de canaux de telle sorte que, si le signal de transport analogique ($S_T$) est échantillonné à la fréquence égale à deux fois la largeur prédéterminée, chaque canal de chaque ensemble de canaux chevauche entièrement le canal correspondant de chaque au moins un autre ensemble de canaux.

3. Procédé selon la revendication 1 ou 2, dans lequel chaque canal ($C_1$, $C_2$, $C_N$) de chaque ensemble de canaux ($SG_1$, $SG_2$, $SG_3$) est modulé selon le même schéma de modulation que le canal correspondant de chaque au moins un autre ensemble de canaux.

4. Procédé selon l'une quelconque des revendications 1 à 3, dans lequel la largeur prédéterminée n'est pas inférieure à la largeur sommée de chaque signal dans un seul ensemble de canaux ($SG_1$, $SG_2$, $SG_3$).

5. Procédé selon l'une quelconque des revendications 1 à 4, dans lequel l'étape de construction de la représentation dans le domaine fréquentiel est effectuée de telle sorte que, pour chaque ensemble de canaux ($SG_1$, $SG_2$, $SG_3$), chaque canal ($C_1$, $C_2$, $C_N$) soit situé au même emplacement relatif dans la bande de fréquences ($b_1$, $b_2$, $b_3$, $b_n$) que le canal correspondant de chaque au moins un autre ensemble de canaux.

6. Procédé selon la revendication 5, dans lequel l'étape de construction de la représentation dans le domaine fréquentiel comprend en outre l'exécution d'un retournement et/ou d'une conjugaison sur des canaux situés dans des bandes de fréquences alternées.

7. Procédé selon l'une quelconque des revendications 1 à 6, dans lequel l'étape de conversion de la représentation dans le domaine fréquentiel comprend la conversion de la représentation dans le domaine fréquentiel en utilisant une seule transformation du domaine temporel (34A, 34B, 34N) pour convertir la représentation dans le domaine fréquentiel en domaine temporel.

8. Procédé selon la revendication 7, dans lequel la pluralité de canaux ($C_1$, $C_2$, $C_N$) comprend à la fois des canaux dérivés de DMT et des canaux dérivés de SSB.

9. Procédé de démultiplexage d'un signal de transport analogique ($S_T$) généré par l'exécution du procédé selon l'une quelconque des revendications précédentes, le procédé comprenant :

    la réception du signal de transport analogique ;
    l'exécution d'une conversion analogique-numérique sur le signal de transport analogique à l'aide d'un convertisseur analogique-numérique (61), pour produire un signal numérisé ;
    le filtrage numérique du signal numérisé pour obtenir un signal séparé ($S_{ST}$) pour chaque bande de fréquences ($b_1$, $b_2$, $b_3$, $b_n$) ;
    l'échantillonnage de chaque signal séparé à une fréquence d'échantillonnage égale à deux fois la largeur prédéterminée pour obtenir une copie sous-échantillonnée ($S_{DS}$) de chaque bande de fréquences,
    pour chaque copie sous-échantillonnée ($S_{DS}$) de chaque bande de fréquences ($b_1$, $b_2$, $b_3$, $b_n$), l'exécution d'un filtrage individuel pour obtenir chaque canal de la copie sous-échantillonnée, dans lequel les canaux peuvent avoir des largeurs de bandes différentes.

10. Procédé de démultiplexage d'un signal de transport analogique ($S_T$) généré par exécution du procédé selon l'une quelconque des revendications 1 à 8, le procédé comprenant :

    la définition de deux blocs de fréquences ($bl_1$, $bl_2$, $bl_3$) ou plus dans le signal de transport analogique, chaque bloc comportant la même largeur de bande prédéterminée et comprenant chacun un nombre entier de bandes de fréquences ($b_1$, $b_2$, $b_3$, $b_n$), dans lequel l'un ou plusieurs blocs du signal de transport analogique transportent ensemble la pluralité de canaux ($C_1$, $C_2$, $C_N$) ;
    pour chaque bloc du signal de transport analogique ($S_T$), le filtrage du signal de transport analogique pour générer un signal de transport filtré ($S_{CF1}$, $S_{CF2}$, $S_{CFN}$) respectif contenant le bloc respectif du signal de transport analogique ; et
    l'exécution d'une opération de démultiplexage sur chaque signal de transport filtré respectif comprenant :

        l'exécution d'une opération d'échantillonnage dans le domaine temporel sur le signal de transport filtré, pour produire un signal analogique décalé vers le bas comprenant un bloc du signal de transport analogique ;
        l'exécution d'une conversion analogique-numérique sur le signal analogique décalé vers le bas à l'aide d'un convertisseur analogique-numérique (61), pour produire un signal décalé vers le bas numérisé ;
        le filtrage numérique du signal décalé vers le bas numérisé pour obtenir des signaux séparés ($S_{ST}$) pour chaque bande de fréquences portée par le signal décalé vers le bas numérisé ; et
        l'échantillonnage de chaque signal séparé à une fréquence d'échantillonnage égale à deux fois la largeur prédéterminée pour obtenir une copie sous-échantillonnée ($S_{DS}$) de chaque bande de fréquences.

11. Procédé de communication entre une unité distribuée (210) et une unité radio distante (100) d'un fronthaul pour un réseau d'accès radio (10), le procédé comprenant :

    le multiplexage d'une pluralité de canaux ($C_1$, $C_2$, $C_N$) pour générer un signal de transport analogique ($S_T$) par l'exécution, par une unité distribuée, du procédé selon l'une quelconque des revendications 1 à 8 ;
    la transmission du signal de transport analogique de l'unité distribuée à l'unité radio distante ; et
    le démultiplexage du signal de transport analogique par l'exécution, par l'unité radio distante, du procédé selon l'une quelconque des revendications 9 à 10.

12. Unité distribuée (210) pour multiplexer une pluralité de canaux ($C_1$, $C_2$, $C_N$), dans lequel les canaux peuvent avoir différentes largeurs de bande, sur un signal de transport analogique ($S_T$) pour communiquer avec une unité radio distante (100) d'un fronthaul pour un réseau d'accès radio (10), l'unité distribuée comprenant un processeur adapté pour :

    diviser la pluralité de canaux en ensembles de canaux ($SG_1$, $SG_2$, $SG_3$) ;
    définir une pluralité de bandes de fréquences ($b_1$, $b_2$, $b_3$, $b_n$) dans le signal de transport analogique, chaque bande de fréquences comportant la même largeur prédéterminée et étant immédiatement adjacente à une autre bande de fréquences ;

attribuer une bande de fréquences respective à chaque ensemble de canaux ;

construire une représentation dans le domaine fréquentiel du signal de transport analogique en agençant, pour chaque ensemble de canaux, chaque canal dans la bande de fréquences attribuée à l'ensemble de canaux de telle sorte que, si le signal de transport analogique est échantillonné à une fréquence égale à deux fois la largeur prédéterminée, chaque canal de chaque ensemble de canaux comporte la même fréquence intermédiaire qu'un canal correspondant d'au moins un autre ensemble de canaux ; et

générer le signal de transport analogique en convertissant la représentation dans le domaine fréquentiel du signal de transport analogique dans le domaine temporel.

13. Unité radio distante (100) adaptée pour recevoir un signal de transport analogique ($S_T$) généré par l'unité distribuée (210) selon la revendication 12, l'unité radio distante comprenant un processeur adapté pour :

recevoir le signal de transport analogique ;

effectuer une conversion analogique-numérique sur le signal de transport analogique à l'aide d'un convertisseur analogique-numérique (61) ;

filtrer numériquement chaque bande de fréquences ($b_1$, $b_2$, $b_3$, $b_n$) pour obtenir des signaux séparés ($S_{ST}$) pour chaque bande de fréquences ;

échantillonner chaque signal séparé à une fréquence d'échantillonnage égale à deux fois la largeur prédéterminée pour obtenir une copie sous-échantillonnée de chaque bande de fréquences ; et

pour chaque copie sous-échantillonnée ($S_{DS}$) de chaque bande de fréquences ($b_1$, $b_2$, $b_3$, $b_n$), effectuer un filtrage individuel pour obtenir chaque canal de la copie sous-échantillonnée, dans lequel les canaux peuvent avoir des largeurs de bandes différentes.

14. Unité radio distante (100) adaptée pour recevoir un signal de transport analogique ($S_T$) généré par l'unité distribuée (210) selon la revendication 12, l'unité radio distante comprenant un processeur adapté pour :

définir deux blocs de fréquences ($bl_1$, $bl_2$, $bl_3$) ou plus dans le signal de transport analogique, chaque bloc comportant la même largeur de bande prédéterminée et comprenant chacun un nombre entier de bandes de fréquences ($b_1$, $b_2$, $b_3$, $b_n$), dans lequel l'un ou plusieurs blocs du signal de transport analogique transportent ensemble la pluralité de canaux ($C_1$, $C_2$, $C_N$) ;

pour chaque bloc du signal de transport analogique ($S_T$), filtrer le signal de transport analogique pour générer un signal de transport filtré respectif ($S_{CF1}$, $S_{CF2}$, $S_{CFN}$) contenant le bloc respectif du signal de transport analogique ; et

effectuer une opération de démultiplexage sur chaque signal de transport filtré respectif comprenant :

l'exécution d'une opération d'échantillonnage dans le domaine temporel sur le signal de transport filtré, pour produire un signal analogique décalé vers le bas comprenant un bloc du signal de transport filtré ;

l'exécution d'une conversion analogique-numérique sur le signal analogique décalé vers le bas à l'aide d'un convertisseur analogique-numérique (61), pour produire un signal décalé vers le bas numérisé ;

filtrage numérique du signal décalé vers le bas numérisé pour obtenir des signaux séparés ($S_{ST}$) pour chaque bande de fréquences portée par le signal décalé vers le bas numérisé ; et

échantillonnage de chaque signal séparé à une fréquence d'échantillonnage égale à deux fois la largeur prédéterminée pour obtenir une copie sous-échantillonnée de chaque bande de fréquences.

15. Fronthaul pour un réseau d'accès radio (10), le fronthaul comprenant :

une unité distribuée (210) selon la revendication 12 ;

une unité radio distante (100) selon la revendication 13 ou 14 ; et

un canal de communication pour transporter le signal de transport analogique ($S_T$) entre l'unité distribuée et l'unité radio distante.

FIG. 1

FIG. 2

FIG. 3

FIG. 4

FIG. 5

EP 3 909 192 B1

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017078024 A1

- EP 1395012 A1